# EUROPÄISCHE PATENTSCHRIFT

(11) **EP 0 698 568 B1**
(45) Veröffentlichungstag und Bekanntmachung des Hinweises auf die Patenterteilung: **10.06.1998**
(21) Anmeldenummer: 95250188.0
(22) Anmeldetag: 31.07.1995
(51) Int. Cl.: B65G 13/06, B65G 43/08, B65G 47/26

(54) **Einrichtung zum Erkennen von Fördergut auf Förderbahnen, insbesondere von Stückgut in Rollenförderern**
Device for detecting goods on conveyors, especially piece-goods on roller conveyors
Dispositif pour détecter des matières à transporter sur convoyeurs, notamment des charges isolées sur convoyeurs à rouleaux

(30) Priorität: 16.08.1994 DE 4430611
(43) Veröffentlichungstag der Anmeldung: 28.02.1996
(73) Patentinhaber: MANNESMANN Aktiengesellschaft, 40213 Düsseldorf (DE)
(72) Erfinder: Bonifer, Edgar, D-64839 Münster (DE); Hartmann, Hans-Jürgen, D-63069 Offenbach (DE); Kratz, Helmut, D-63110 Rodgau (DE)
(74) Vertreter: Presting, Hans-Joachim, Dipl.-Ing.

(56) Entgegenhaltungen:
- EP-A- 0 640 540
- DE-A- 3 827 903
- DE-A- 4 240 664
- DE-C- 3 817 388
- DE-U- 8 231 693

## Beschreibung

Die Erfindung betrifft eine Einrichtung zum Erkennen der Anwesenheit von Fördergut auf aus aufeinanderfolgenden Abschnitten von antreib- und bremsbaren Förderrollen gebildeten Stauplätzen einer Rollenbahn gemäß dem Oberbegriff des Anspruches 1.

Bei einer Staurollenbahn sind an den Stauplätzen Schaltleisten vorgesehen, die als zweiseitige Hebel ausgebildet sind, die mit ihrem unteren Ende ein Schaltelement betätigen. Dieses bewirkt über eine Logikschaltung einen Hub eines Stellgerätes, wodurch eine Schaltrolle von einem Hebel um ca. 90° verdreht wird. Dabei wird eine Bremsrolle über einen Exzentertragring gehoben und im weiteren Verlauf werden die Tragrollen von einem in axialer Richtung festliegenden Bremsgurt sofort gebremst (DE 38 17 388 C1).

Anstelle solcher Schaltrollen könnten auch Lichtschranken eingesetzt werden. Derartige Erkennungs- und Schaltsysteme sind jedoch entweder unwirtschaftlich oder weisen technische Nachteile auf. So sind mechanische Schaltlineale bzw. Schaltbügel abhängig vom Gewicht des Fördergutes; es tritt ein unvermeidlicher Verschleiß auf, und eine solche Lösung ist für einen Queraufschub des Fördergutes ungeeignet. Außerdem ist diese Lösung teilweise nur für ebenes Fördergut brauchbar.

Bei Lichtschranken tritt der Nachteil auf, daß ein elektronischer Logikteil nicht ohne weiteres untergebracht werden kann. Eine elektronische Ansteuerung für Einzel-, Blockabzug und Blockeinzug ist außerdem problematisch.

Aus der deutschen Offenlegungsschrift DE 42 40 664 A1 ist bereits ein Kettenförderer bekannt, auf dessen Kette Fördergut direkt oder indirekt über Paletten gefördert wird. Um zu erkennen, ob und wo Fördergüter auf dem Kettenförderer befördert werden bzw. ruhen oder eingelagert sind, kommen Lichtschranken zum Einsatz. Die Lichtschranken weisen eine Geber-/Empfängereinhet sowie eine Reflektoranordnung auf. Mit dem Ziel die Beschädigungsgefahr der Geber-/Empfängereinheit durch das Fördergut zu vermindern wird vorgeschlagen, die Geber-/Empfängereinheit unterhalb der durch die Ketten des Kettenförderes gebildeten Förderebene anzuordnen. Um sicherzustellen, daß die bewerkten Fördergüter sicher erfasst werden, ist der von der Gebereinheit emittierte Lichtstrahl in einem spitzen Winkel zu der Förderebene sowie quer zur Förderrichtung ausgerichtet.

Desweiteren zeigt das deutsche Gebrauchsmuster DE 82 31 693 U1 eine Rollenbahn, die als Zuführung für verschiedene Abzweigrollenbahnen betrieben wird. Um die transportierten Paletten, Kisten, Platten oder ähnlichen Trägerelemente auf die Abzweigbahnen ausschleusen zu können, wird vorgeschlagen, unterhalb der Oberkante der Förderrollen und zwischen zwei benachbarten Förderrollen ein relativ großvolumiges Abfrage- und/oder Steuerelement anzuordnen. Dieses Steuerelement hat die Aufgabe, ein auf der Unterseite der Trägerelemente angeordnetes Codierelement zu erkennen. Anhand der Codierung wird entschieden, ob das Trägerelement ausgeschleust wird oder nicht. Um die Abfrageelemente zwischen den Förderrollen unterbringen zu können, werden die Förderrollen in ihrem mittleren Bereich ausgespart ausgebildet. Die Trägerelemente werden somit nur von den rollenförmigen Enden der Förderrollen getragen.

Der Erfindung liegt das Problem zugrunde, eine Einrichtung zum Erkennen von Fördergut zu schaffen, unabhängig von einer minimalen oder maximalen Breite bzw. Höhe des Stückgutes und des Gewichtes.

Die gestellte Aufgabe wird erfindungsgemäß dadurch durch die Merkmale des Anspruch, 1 gelöst. Dadurch kann das Fördergut erkannt werden, eine Auswertung des Signals im Logikteil durchgeführt werden und im Staufall kann das Abschalten des Stauplatzes über das Elektromagnetventil eingeleitet werden. Damit erfüllt der Baustein über die optische Erkennung des Fördergutes die Aufgabe der elektropneumatischen Ab- und Zuschaltung (Stauen und Fördern) der einzelnen Stauplätze eines Rollenstauförderers. Bei Erkennung des Fördergutes ist es möglich, durch den Lichttaster im elektronischen Logikteil den Zustand "belegt" oder "nicht belegt" des benachbarten, vorgelagerten Stauplatzes mit dem zu schaltenden Stauplatz zu vergleichen. Im Staufall wird das Elektromagnetventil geschaltet und damit der Stauvorgang eingeleitet.

Eine wesentliches Merkmal der Erfindung besteht darin, daß der Ventil-Lichttaster-Baustein zwischen zwei aufeinanderfolgenden Förderelementen derart angeordnet ist, daß der Sendestrahl in einer Ebene, die senkrecht zur Förderrichtung im Förderrollenspalt verläuft, schräg von unten nach oben gerichtet ist. Dadurch kann die volle Breite einer Förderrollenbahn trotz in Höhe und Breite unterschiedlicher Stückgüter abgetastet werden.

Nach weiteren Merkmalen ist es möglich, daß die Schalt- bzw. Steuerlogik auf Einzelabzug und/oder Blockabzug und/oder Blockeinzugs-Bewegungen der Förderelemente und/oder Belegtmeldung ausgelegt ist.

Da keine mechanischen Schaltelemente mehr vorhanden sind, ist ferner vorteilhaft, daß der Ventil-Lichttaster-Baustein unterhalb der Rollenoberkante angeordnet ist. Dadurch wird der Lauf des Fördergutes nicht mehr durch mechanische Einwirkung gestört.

Die Erfindung kann durch eine in der Praxis besonders vorteilhafte kompakte Bauweise verwirklicht werden, die auf den Durchmesser von Förderrollen, deren Abstand u.dgl. Rücksicht nimmt und ist dahingehend gestaltet, daß der Ventil-Lichttaster-Baustein ein dem Förderrollenspalt angepaßtes Gehäuse aufweist.

Dabei ist optisch und mechanisch vorteilhaft, daß eine erste Optik für den Sendestrahl in einem schmalen Gehäuseabschnitt und eine zweite Optik für den Empfangsstrahl in einem breiteren Gehäuseabschnitt angeordnet sind. Die Gehäuseabschnitte erstrecken sich jeweils zwischen und unter den Förderrollen.

Um einen reflektierten Sendestrahl (Infrarotlicht, Laserstrahl, Licht normaler Wellenlänge, Ultraschall) zuverlässig zu erfassen, wird vorgeschlagen, daß die zweite Optik für den Empfangsstrahl eine um das Mehrfache größere Eingangsfläche bildet als die Ausgangsfläche der ersten Optik für den Sendestrahl.

Zur Ausführung von Einzelabzug und/oder Blockabzug und/oder Blockeinzugsbewegungen der Förderrollen ist es weiterhin vorteilhaft, daß in einer Förderrollenbahn in gleichen oder in variablen Abständen Ventil-Lichttaster-Bausteine zwischen jeweils zwei Förderrollen angeordnet und miteinander verbunden sind.

Ein Ausführungsbeispiel der Erfindung ist in der Zeichnung dargestellt und wird im folgenden näher beschrieben. Es zeigen
- Fig. 1: eine Förderrollenbahn von der Seite gesehen,
- Fig. 2: eine zu Fig. 1 gehörende Vorderansicht,
- Fig. 3: die Anordnung des Bausteins an einem Längsträger, von links gesehen,
- Fig. 4: die Anordnung des Bausteins am Längsträger, von rechts gesehen.
- Fig. 5: eine Seitenansicht zu den Fig. 3 und 4,
- Fig. 6 bis 10: jeweils eine Vorderansicht bei wechselnder Stückgutgröße und Stückgutlage,
- Fig. 11: eine Seitenansicht der Förderrollenbahn mit mehreren Bausteinen im Einsatz und
- Fig. 12: in einfacher Darstellung zwei hintereinanderliegende Bausteine jeweils mit Logikschaltung und Elektromagnetventil.

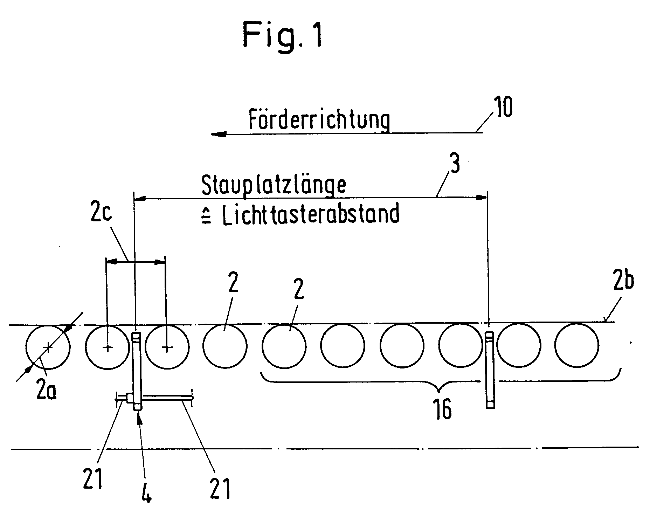

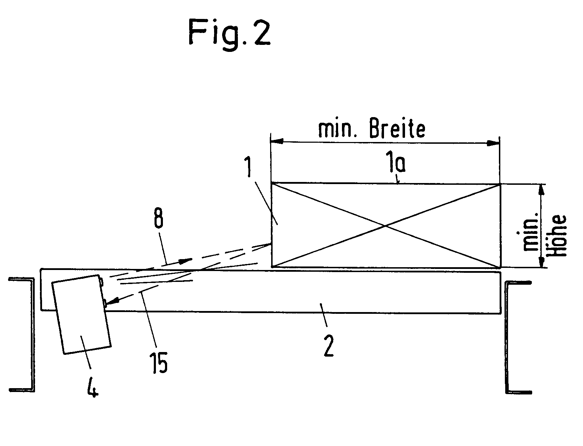

Das Fördergut 1 wird meist in Form von Stückgut 1a (Transportbehälter aus Kunststoff, Stahl, Holz, Karton, mit Schrumpffolie ummantelte Transporteinheiten, Transportbehälter mit konischen Seitenflächen, unebene, mit Stegen oder Rippen versehene Boden- oder Seitenflächen, farbige Oberflächen, glänzend bis matt, Fördergüter oder Behälter mit zur Förderrichtung 10 nicht parallelen, also gedrehten Seitenflächen, verdreht ankommendes Fördergut) durch zeitlich gesteuert angetriebene Förderrollen 2 transportiert, die mit ihren Förderrollendurchmessern 2a eine Rollenoberkante 2b bilden. Mehrere solcher Förderrollen 2 bilden eine Stauplatzlänge 3. Der Förderrollenabstand 2c bestimmt die Abmessungen eines Ventil-Lichttaster-Bausteins 4, der eine kompakte Einheit aus einem Lichttaster 5 mit Elektromagnetventil 6 bildet. In Ausnahmefällen kann auch nur der Lichttaster 5 (bei gleichen Abmessungen) eingesetzt werden (Fig. 1 und 2).

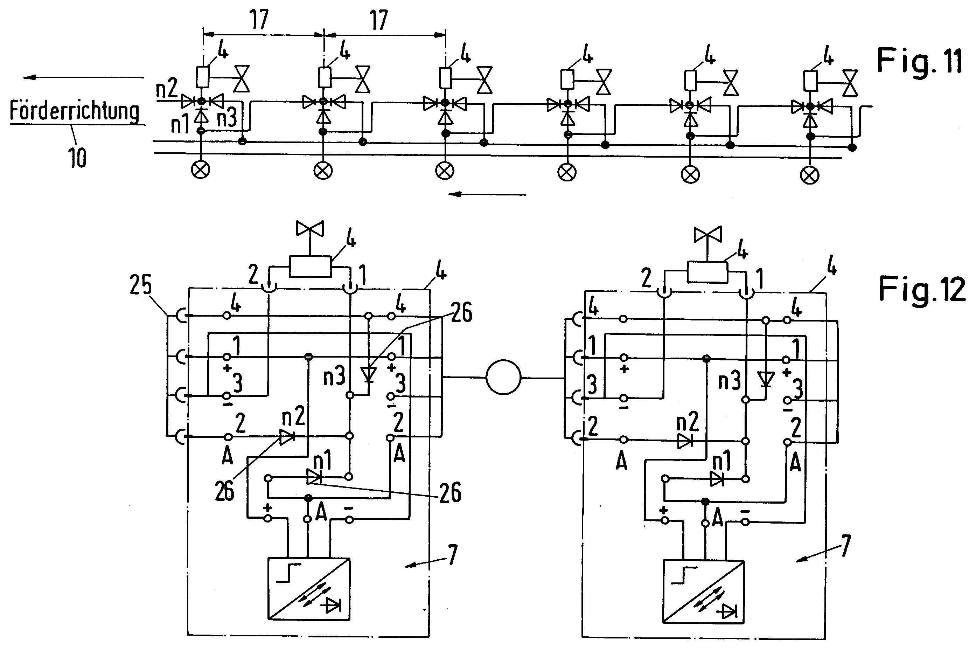

Außerdem beinhaltet der Baustein 4 im gezeichneten Fall eine Schalt- bzw. Steuerlogik 7 (Fig. 12). Aus dem Lichttaster 5 wird ein Sendestrahl 8 (Lichtstrahl normaler Wellenlänge, Laserstrahl, Infrarotstrahl, Ultraschallwelle u.dgl.) ausgesendet, der auf das Stückgut 1a trifft und in einer Ebene 9, die senkrecht zur Förderrichtung 10 verläuft, liegt.

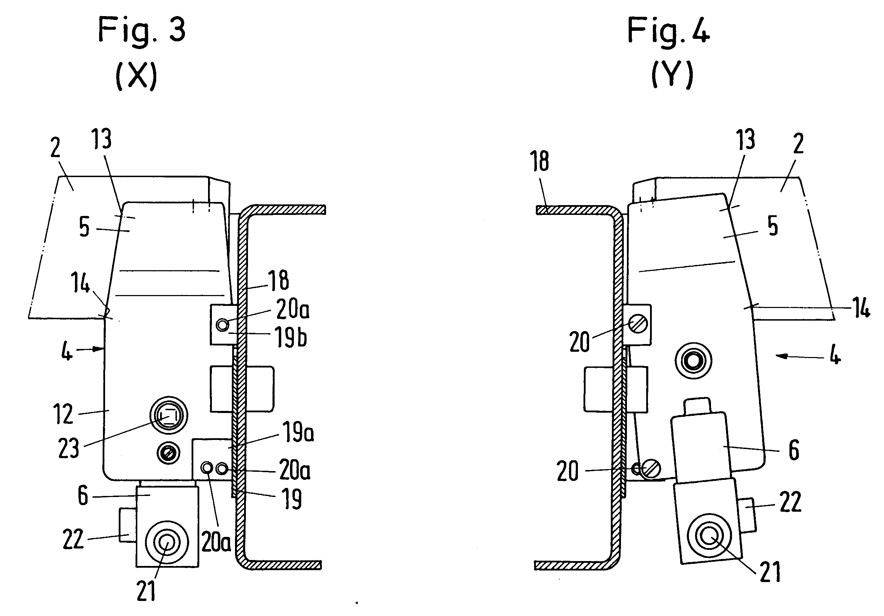

Die Schalt- bzw. Steuerlogik 7 ist auf Einzelabzug und/oder Blockabzug und/oder Blockeinzugs-Bewegungen der Förderrollen 2 und/oder auf eine Belegtmeldung ausgelegt. In einem Förderrollenspalt 11 einer Förderrollenbahn 16 ist an einem Längsträger 18 ein Gehäuse 12 an einer Haltetung 19 mit gebogenen Stehlagern 19a und 19b mittels Schrauben 20 befestigt. Über mehrere Gewindelöcher 20a kann eine Winkeleinstellung des Gehäuses 12 vorgenommen werden. An dem Elektromagnetvenitl 6 ist eine Druckleitungsversorgung 21 und ein zur jeweiligen Kolben-Zylinder-Einheit führende Druckleitung 22 angeschlossen. Außerdem ist eine elektrische Steckverbindung 23 vorgesehen (Fig. 3 und 4).

Der Baustein 4 ist unterhalb der Rollenoberkante 2b angeordnet, wobei der Lichttaster 5 zwischen zwei aufeinanderfolgenden Förderrollen 2 derart eingebaut ist, daß der Sendestrahl 8 in der Ebene 9 schräg von unten nach oben gerichtet ist. Dabei ist der Baustein mit seinem Gehäuse 12 dem Förderrollenspalt 11 angepaßt.

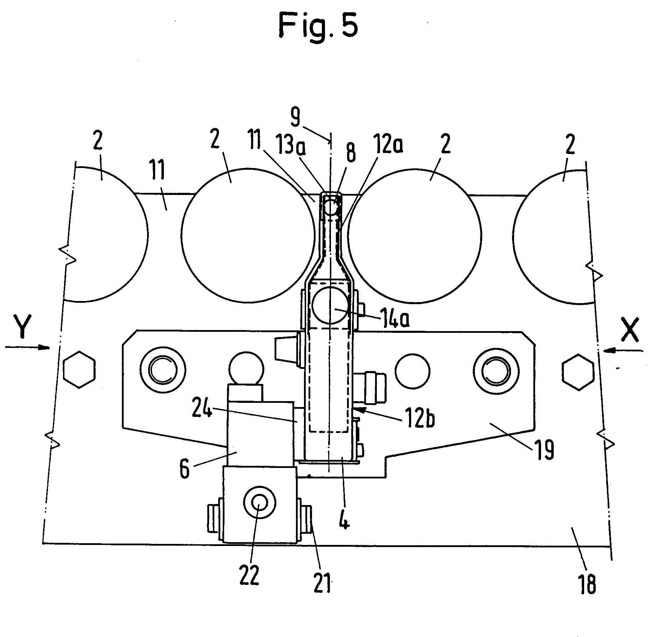

Die erste Optik 13 für den Sendestrahl 8 ist in einem schmalen Gehäuseabschnitt 12a und eine zweite Optik 14 für den Empfangsstrahl 15 in einem breiteren Gehäuseabschnitt 12b untergebracht. Die zweite Optik 14 für den Empfangsstrahl 15 bildet eine um das Mehrfache größere Eingangsfläche 14a gegenüber der Ausgangsfläche 13a der ersten Optik 13 für den Sendestrahl 8 (Fig. 5).

Der Lichttaster 5 und das Elektromagnetventil 6 sind elektrisch über eine Steckverbindung 24 miteinander gekoppelt und auf der Halterung 19 (einem Blechformteil) befestigt. Der durch die erste Optik 13 gegebene Tasterkopf liegt somit verdeckt zwischen den Tragrollen ca. 8 bis 10 mm unter der Rollenoberkante 2b.

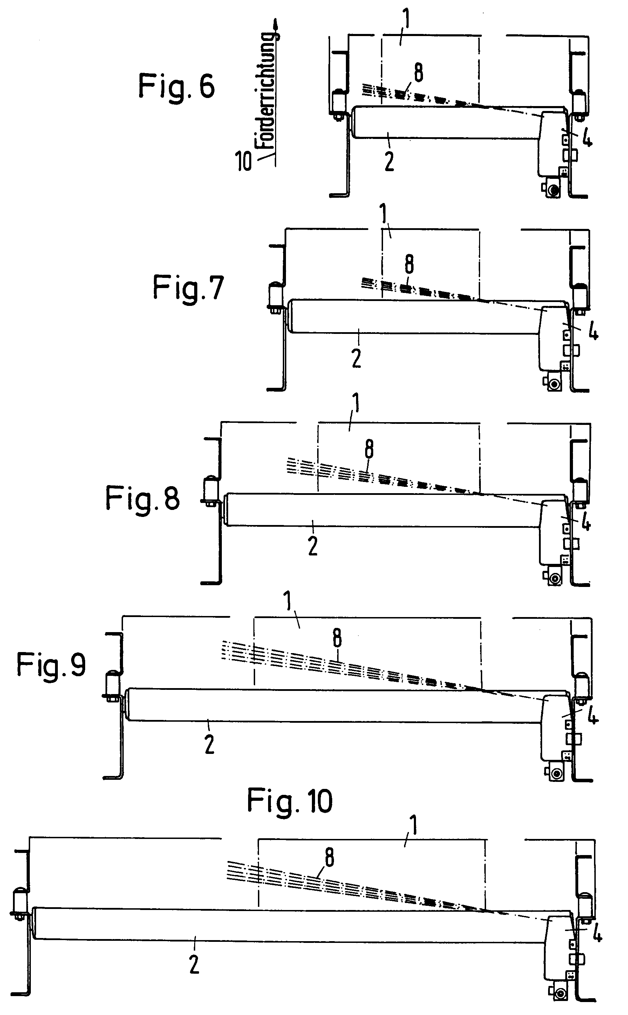

Zur sicheren Erkennung des Fördergutes 1 muß ein Teil der Boden- oder Seitenfläche des Fördergutes 1 im Funktionsbereich des Bausteins 4 liegen. Die Bestimmung der Mindest-Förderguthöhe in Abhängigkeit von der Fördergutbreite ist aus den Fig. 6 bis 10 zu erkennen, wo auch eine seitliche Verlagerung des Fördergutes 1 berücksichtigt ist.

In einer Förderrollenbahn 16 sind hierbei in gleichen oder in variablen Abständen 17 Bausteine 4 zwischen jeweils zwei Förderrollen 2 angeordnet (Fig. 11) und, wie in Fig. 12 gezeigt, miteinander verbunden.

Gemäß Fig. 12 ist weiterhin der Ventil-Lichttaster-Baustein 4 mit seiner Schalt-bzw. Steuerlogik 7 in den Grundzügen dargestellt. An der Eingangsseite 25 ist ein Plus-Anschluß 1 für die Eigenversorgungsspannung geschaltet. Auf der Gegenseite wird dieser Plus-Anschluß 1 für den nächstfolgenden Baustein 4 und alle weiteren Bausteine 4 bei mehreren Stauplätzen verwendet.

Der Minus-Anschluß 3 dient der Spannungsversorgung des Elektromagnetventils 6, ferner für die eigene Spannungsversorgung des Bausteins 4 und für den nächsten und alle folgenden Bausteine 4.

Der Anschluß 2 bildet den Eingang von einem vorhergehenden Baustein 4 und außerdem den Ausgang zu dem nächsten Baustein 4.

Der Anschluß ist an das Elektromagnetventil 6 gelegt. Entsprechende Dioden 26 steuern die gewünschte Stromrichtung.

Die Funktionsweise der Einrichtung wird nachstehend beschrieben:

Zum "Stauauflösen" und "Einzelabzug" erfolgt das Abziehen des auf dem ersten Stauplatz befindlichen Fördergutes 1 durch elektrische Ansteuerung des ersten Bausteins 4. Beim Verlassen des ersten Stauplatzes gibt das Fördergut 1 den ersten Baustein, d.h. den ersten Lichttaster 5 frei. Damit wird das Anlaufen des zweiten Stauplatzes eingeleitet. Weitere Vorgänge laufen analog ab.

Bei "Blockabzug" wird durch ensprechende elektrische Ansteuerung der einzelnen Lichttaster 5 das gesamte oder ein Teilabschnitt des angestauten Fördergutes 1 im Block abgezogen.

Für einen "Blockeinlauf" wird im Normalfall das Fördergut 1 mit einer Lücke (Abstand) von ca. einer Stauplatzlänge 3 auf der Förderrollenbahn 16 gefördert. Durch entsprechende elektrische Ansteuerung der Lichttaster 5 können Fördergüter 1 im Block, d.h. ohne Lücken in die Förderrollenbahn 16 einlaufen; ein solcher Vorgang bedeutet eine erhöhte Einlaufleistung.

Bei "Einzelabzug" erfolgt die Ansteuerung immer am ersten Lichttaster 5 im ersten Stauplatz. "Blockabzug" und "Blockeinlauf" können sowohl über Kopf- als auch über Mitteneinspeisung des Fördergutes 1 verwirklicht werden.

## Patentansprüche

1. Einrichtung zum Erkennen der Anwesenheit von Fördergut auf aus aufeinanderfolgenden Abschnitten von antreib- und bremsbaren Förderrollen gebildeten Stauplätzen einer Rollenbahn, wobei die Einrichtung mit einem Ventil zum Steuern des Antriebszustandes der Förderrollen eines Stauplatzes verbunden ist,
dadurch gekennzeichnet,
daß die Einrichtung im wesentlichen aus einem Lichttaster (5) besteht, der mit einem als Elektromagnetventil (6) ausgebildeten Ventil über eine Schalt- bzw. Steuerlogik (7) verbunden ist, daß der Lichttaster (5), das Elektromagnetventil (6) und die Schalt- bzw. Steuerlogik (7) zu einem Ventil-Lichttaster-Baustein (4) zusammengefaßt sind, der zwischen den Förderrollen (2) eines Stauplatzes und unterhalb der Oberkante (2b) der Förderrollen (2) angeordnet ist.

2. Einrichtung nach Anspruch 1,
dadurch gekennzeichnet,
daß der Sendestrahl (8) des Ventil-Lichttaster-Baustein (4) in einer Ebene (9), die senkrecht zur Förderrichtung (10) und durch den Förderrollenspalt (11) verläuft, von unten schräg nach oben gerichtet ist.

3. Einrichtung nach Anspruch 1 oder 2,
dadurch gekennzeichnet,
daß der Ventil-Lichttaster-Baustein (4) ein dem Förderrollenspalt (11) angepaßtes Gehäuse (12) aufweist.

4. Einrichtung nach einem der Ansprüche 1 bis 3,
dadurch gekennzeichnet,
daß eine erste Optik (13) für den Sendestrahl (8) in einem schmalen Gehäuseabschnitt (12a) und eine zweite Optik (14) für den Empfangsstrahl (15) in einem breiteren Gehäuseabschnitt (12b) angeordnet sind.

5. Einrichtung nach einem der Ansprüche 1 bis 4,
dadurch gekennzeichnet,
daß die zweite Optik (14) für den Empfangsstrahl (15) eine um das mehrfache größere Eingangsfläche (14a) bildet als die Ausgangsfläche der ersten Optik (13) für den Sendestrahl (8).

6. Einrichtung nach einem der Ansprüche 1 bis 5,
dadurch gekennzeichnet,
daß je Stauplatz der Rollenbahn (16) ein Ventil-Lichttaster-Baustein (4) vorgesehen ist und diese miteinander verbunden sind, sowie die Schalt- bzw. Steuerlogik (7) auf Einzelabzug und/oder Blockabzug und/oder Blockeinzugs-Bewegungen der Förderrollen (2) und/oder Belegtmeldung ausgelegt ist.

## Claims

1. An apparatus for recognising the presence of material being conveyed at stowing positions of a roller conveyor which are formed from successive sections of drivable and brakable transport rollers, the means being connected to a valve for controlling the drive state of the transport rollers of a stowing position, characterised in that the means essentially consists of a light scanner (5) which is connected to a valve in the form of a electromagnetic valve (6) by means of a switching or control logic (7), that the light scanner (5), the electromagnetic valve (6) and the switching or control logic (7) are combined to form a valve-light scanner component (4) which is arranged between the transport rollers (2) of a stowing position and beneath the upper edge (2b) of the transport rollers (2).

2. An apparatus according to Claim 1, characterised in that the emission beam (8) of the valve-light scanner component (4) is directed obliquely upwards from below in a plane (9) which extends at right-angles to the direction of conveyance (10) and through the gap (11) in the transport rollers.

3. An apparatus according to Claim 1 or 2, characterized in that the valve-light scanner component (4) has a housing (12) adapted to the gap (11) in the transport rollers.

4. An apparatus according to one of Claims 1 to 3, characterized in that a first lens system (13) for the emission beam (8) is arranged in a narrow housing section (12a) and a second lens system (14) for the receiving beam (15) is arranged in a wider housing section (12b).

5. An apparatus according to one of Claims 1 to 4, characterized in that the second lens system (14) for the receiving beam (15) forms an input surface (14a) which is several times larger than the output surface of the first lens system (13) for the emission beam (8).

6. An apparatus according to one of Claims 1 to 5, characterized in that one valve-light scanner component (4) is provided per stowing position of the roller conveyor (16) and that these components are connected together, and also the switching and control logic (7) is designed for individual removal and/or block removal and/or block intake movements of the transport rollers (2) and/or for indicating occupation.

## Revendications

1. Dispositif destiné à identifier la présence de marchandise à transporter sur des emplacements de retenue d'un transporteur à rouleaux constitués de tronçons successifs de rouleaux transporteurs pouvant être entraînés et freinés, le dispositif étant relié à une vanne destinée à la commande de l'état d'entraînement des rouleaux transporteurs d'un emplacement de retenue,
caractérisé en ce que
le dispositif est constitué pour l'essentiel d'un détecteur photoélectrique (5) qui est relié à une vanne réalisée sous la forme d'une vanne électromagnétique (6) par l'intermédiaire d'une logique (7) de commutation ou de commande, en ce que le détecteur photoélectrique (5), la vanne électromagnétique (6) et la logique (7) de commutation ou de commande, sont regroupés en un module (4) détecteur photoélectrique/vanne qui est disposé entre les rouleaux transporteurs (2) d'un emplacement de retenue, et sous la surface supérieure (2b) des rouleaux transporteurs (2).

2. Dispositif selon la revendication 1,
caractérisé en ce que
le rayon d'émission (8) du module (4) détecteur photoélectrique/vanne est orienté obliquement du bas vers le haut dans un plan (9) qui s'étend perpendiculairement au sens (10) du transport et qui passe par l'emprise (11) des rouleaux transporteurs.

3. Dispositif selon la revendication 1 ou 2,
caractérisé en ce que
le module (4) détecteur photoélectrique/vanne comporte un boîtier (12) adapté à l'emprise (11) des rouleaux transporteurs.

4. Dispositif selon l'une quelconque des revendications 1 à 3,
caractérisé en ce que
une première optique (13) destinée au rayon d'émission (8) est logée dans une partie étroite (12a) du boîtier, et en ce qu'une deuxième optique (14) destinée au rayon de réception (15) est logée dans une partie plus large (12b) du boîtier.

5. Dispositif selon l'une quelconque des revendications 1 à 4,
caractérisé en ce que
la deuxième optique (14) destinée au rayon de réception (15) forme une surface d'entrée (14a) qui est supérieure d'un multiple à la surface de sortie de la première optique (13) destinée au rayon d'émission (8).

6. Dispositif selon l'une quelconque des revendications 1 à 5,
caractérisé en ce que
un module (4) détecteur photoélectrique/vanne est prévu pour chaque emplacement de retenue du transporteur (16) à rouleaux, et que ceux-ci sont reliés entre eux, et en ce que la logique (7) de commutation ou de commande est conçue pour un retrait individuel et/ou un retrait par bloc et/ou des mouvements d'amenée par bloc des rouleaux transporteurs (2), et/ou pour une signalisation d'occupation.
